# EUROPEAN PATENT SPECIFICATION

(11) **EP 3 225 667 B1**
(45) Date of publication and mention of the grant of the patent: **01.01.2020**
(21) Application number: 15862920.4
(22) Date of filing: 24.11.2015
(51) Int. Cl.: C09D 5/16, C09D 133/02, B05D 5/00, B05D 7/24, B32B 15/082, B32B 27/30, C09D 5/14, C09D 133/04

(54) **ANTIFOULING COATING COMPOSITION, ANTIFOULING COATING FILM, SUBSTRATE HAVING ANTIFOULING COATING FILM, ANTIFOULING SUBSTRATE, METHOD FOR PRODUCING SUBSTRATE HAVING ANTIFOULING COATING FILM, AND METHOD FOR PREVENTING FOULING OF SUBSTRATE**
BEWUCHSHEMMENDE BESCHICHTUNGSZUSAMMENSETZUNG, BEWUCHSHEMMENDER BESCHICHTUNGSFILM, SUBSTRAT MIT BEWUCHSHEMMENDEM BESCHICHTUNGSFILM, BEWUCHSHEMMENDES SUBSTRAT, VERFAHREN ZUR HERSTELLUNG EINES SUBSTRATS MIT BEWUCHSHEMMENDEM BESCHICHTUNGSFILM UND VERFAHREN ZUR BEWUCHSHEMMUNG BEI EINEM SUBSTRAT
COMPOSITION DE REVÊTEMENT ANTISALISSURES, FILM DE REVÊTEMENT ANTISALISSURES, SUBSTRAT PRÉSENTANT UN FILM DE REVÊTEMENT ANTISALISSURES, SUBSTRAT ANTISALISSURES, PROCÉDÉ DE PRODUCTION D'UN SUBSTRAT PRÉSENTANT UN FILM DE REVÊTEMENT ANTISALISSURES, ET PROCÉDÉ DE PRÉVENTION DE L'ENCRASSEMENT D'UN SUBSTRAT

(30) Priority: 26.11.2014 JP 2014238900
(43) Date of publication of application: 04.10.2017
(73) Proprietor: CHUGOKU MARINE PAINTS, LTD., Otake-shi Hiroshima 739-0652 (JP)
(72) Inventor: MASUDA, Satoshi, Otake-shi Hiroshima 739-0652 (JP); HAYASHI, Yusuke, Otake-shi Hiroshima 739-0652 (JP)
(74) Representative: Hoffmann Eitle
(86) International application number: PCT/JP2015/082847
(87) International publication number: WO 2016/084769

(56) References cited:
- EP-A1- 0 300 857
- EP-A1- 2 204 423
- WO-A1-2009/057505
- WO-A1-2011/046086
- WO-A1-2011/118526
- WO-A1-2011/158358
- WO-A1-2013/073580
- WO-A1-2014/175246
- WO-A1-2014/189069
- JP-A- 2008 156 511
- JP-A- 2009 091 562
- JP-B1- 5 608 301
- US-A1- 2011 206 632

## Description

### TECHNICAL FIELD

The present invention relates to an antifouling coating composition, an antifouling coating film, a substrate with an antifouling coating film, an antifouling substrate, a method for producing substrate with an antifouling coating film, and a method for preventing substrate from fouling.

### BACKGROUND ART

When a substrate is submerged in water over a long period, the surface of substrates, for example, marine vessels, underwater structures and fishing gears such as fishnets, is prone to be fouled by various aquatic organisms including animals such as oysters, mussels and barnacles, plants such as seaweeds, and bacteria. In the case of, for example, a marine vessel, the propagation of such aquatic organisms on the substrate surface increases the surface roughness of the marine vessel, resulting in a decrease in speed and an increase in fuel consumption. Further, when the substrate has an anticorrosive coating film, the aquatic organisms damage the anticorrosive coating film and can cause undesired consequences such as a decrease in the strength and performance of the substrate and a significant shortening of the life of the substrate. Thus, antifouling coatings that are applied to the surface of substrates to prevent the attachment of aquatic organisms have been studied and developed.

Antifouling coatings that combine metal (meth)acrylate salt copolymers and various antifouling agents are widely used because of their good consumability and high antifouling properties.

As an example of such antifouling coatings, Patent Document 1 describes an antifouling coating composition which is substantially free from cuprous oxide and organic tin and contains a metal-containing copolymer, 4,5-dichloro-2-n-octyl-4-isothiazolin-3-one and a metal pyrithione compound.

Patent Document 2 describes an antifouling coating composition which contains two or more antifouling agents including 4-bromo-2-(4-chlorophenyl)-5-(trifluoromethyl)-1H-pyrrole-3-carbonitrile, and an acrylic resin having in a side chain a group represented by the formula (i) below: 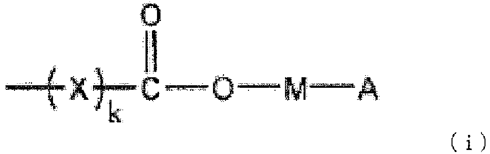 [in the formula (i), M is a divalent metal and A is an organic acid residue of a monobasic acid].

Further, Patent Document 3 describes an antifouling coating composition which contains a metal salt bond-containing copolymer, 4,5-dichloro-2-n-octyl-4-isothiazolin-3-one, 2-pyridinethiol-1-oxide zinc and titanium oxide.

Patent Document 4 describes an antifouling coating composition which includes at least one hydrolyzable copolymer selected from the group consisting of specific metal salt bond-containing copolymers and a silyl ester copolymer, copper and/or an inorganic copper compound and zinc oxide, wherein the content of the copper and/or inorganic copper compound is in the range of 100 to 400 parts by weight and the content of the zinc oxide is in the range of 50 to 350 parts by weight, each content being based on 100 parts by weight of the hydrolyzable copolymer, and the weight ratio of the zinc oxide to the copper and/or the inorganic copper compound (zinc oxide/(copper and/or inorganic copper compound) is in the range of 0.6 to 1.2.

Patent Document 5 describes an antifouling coating composition comprising a zinc ester functional polymer and particles of copper pyrithione, wherein said particles have an average aspect ratio within a range of from about 8 to about 15.

### CITATION LIST

### PATENT LITERATURE

Patent Document 1: WO 2004/037932
Patent Document 2: JP-A-2010-150355
Patent Document 3: JP-A-2008-156511
Patent Document 4: EP 2 204 423 A1
Patent Document 5: US 2011/0206632 A1

### SUMMARY OF INVENTION

### TECHNICAL PROBLEM

However, the antifouling coating compositions described in the aforementioned patent documents still have room for improvement in properties such as coating film consumption degree and antifouling properties.

Antifouling coating films disposed on substrates such as marine vessels are degraded, for example, are worn and become porous with the lapse of time. Such degraded antifouling coating films are usually repaired for purposes such as to protect the substrates from fouling sufficiently.

This repairing is made by forming an antifouling coating film on the substrate. If a new antifouling coating film is formed on a degraded antifouling coating film, in particular, a porous antifouling coating film, the conventional techniques tend to encounter bubbling (blistering) in the newly formed antifouling coating film. In addition to the appearance problem, an antifouling coating film with blisters separates easily from the substrate. Thus, a usual approach that is taken is to first scrape off the degraded antifouling coating film and then to form a new antifouling coating film.

When such a degraded antifouling coating film is scraped off, however, still healthy portions of the antifouling coating film tend to be shaved off and further the scraping tends to shave the substrate itself and primer coating films such as an anticorrosive coating film disposed on the substrate. Due to this fact, it is sometimes necessary that a new antifouling coating film be formed on the degraded antifouling coating film without scraping off the degraded antifouling coating film depending on circumstances such as the locations to be repaired.

In the above case, as already mentioned, when the conventional antifouling coating compositions such as those described in the above patent documents are applied onto degraded coating films, in particular, porous coating films, the resultant antifouling coating films have defects such as bubbles (blisters). This is another problem to be solved of the conventional antifouling coating compositions.

Further, the conventional antifouling coating compositions are incapable of forming antifouling coating films which are excellent in coating film consumption degree and antifouling properties and also have excellent coating film properties such as weather resistance.

The present invention has been made in light of the demands described above. It is therefore an object of the invention to provide an antifouling coating composition which can form an antifouling coating film having excellent coating film properties such as coating film consumption degree, antifouling properties and weather resistance while inhibiting the occurrence of bubbles (blisters) even when applied onto a degraded coating film.

### SOLUTION TO PROBLEM

After extensive studies, the present inventor has found that an antifouling coating film that achieves the above object can be obtained by using an antifouling coating composition containing a specific hydrolyzable polymer, versatic acid and an antifouling agent. Based on the finding, the present invention has been completed. Example configurations of the invention are described below.

An antifouling coating composition according to the present invention comprises a hydrolyzable polymer (A) including at least one selected from the group consisting of a polymer (A1) having a structural unit represented by the formula (1) below and a polymer (A2) having a structural unit represented by the formula (2) below, a versatic acid (B), and an antifouling agent component (C). 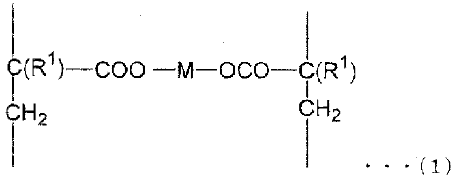 [In the formula (1), M is zinc or copper, and R¹ independently at each occurrence is a hydrogen atom or a methyl group.]

-COO-M-O-COR² ··· (2)

[In the formula (2), M is zinc or copper, and R² is an organic group.]

The antifouling agent component (C) preferably includes 4-bromo-2-(4-chlorophenyl)-5-(trifluoromethyl)-1H-pyrrole-3-carbonitrile (C1).

The versatic acid (B) is preferably present in a ratio of 0.1 to 10 wt% relative to 100 wt% of the antifouling coating composition, and is preferably present in a ratio of 0.5 to 50 parts by weight per 100 parts by weight of the hydrolyzable polymer (A).

The antifouling agent components (C) preferably include an antifouling agent other than (C1).

The antifouling coating composition of the invention preferably comprises at least one dehydrating agent selected from the group consisting of anhydrous gypsum, hemihydrate gypsum (calcined gypsum), synthetic zeolite adsorbents, ortho esters, silicates and isocyanates, and preferably comprises a chlorinated paraffin.

The polymer (A) preferably includes a structural unit derived from a monomer (a1) represented by the formula (I): CH₂ = C(R¹)-COO-M-O-CO-C(R¹) =CH₂ [in the formula (I), M is zinc or copper, and R¹ independently at each occurrence is a hydrogen atom or a methyl group] and a structural unit derived from an unsaturated monomer (a2) copolymerizable with the monomer (a1).

The monomer (a1) is preferably at least one monomer selected from the group consisting of zinc diacrylate, zinc dimethacrylate, copper diacrylate and copper dimethacrylate.

The unsaturated monomer (a2) preferably includes at least one unsaturated monomer selected from the group consisting of alkyl (meth)acrylates, alkoxyalkyl (meth)acrylates and hydroxyalkyl (meth) acrylates, and more preferably includes at least one unsaturated monomer selected from the group consisting of methyl (meth)acrylate, ethyl (meth)acrylate, butyl (meth)acrylate, 2-methoxyethyl (meth)acrylate, 3-methoxybutyl (meth)acrylate and 2-hydroxyethyl (meth)acrylate.

The content of zinc and/or copper in the polymer (A) is preferably 0.5 to 25 wt% of the polymer (A).

An antifouling coating film according to the present invention is formed from the antifouling coating composition. A substrate with an antifouling coating film according to the present invention comprises the antifouling coating film.

An antifouling substrate according to the present invention includes a substrate where a surface of a substrate to be or being in contact with seawater or freshwater is covered with the antifouling coating film. The substrate is preferably any of an underwater structure, a marine vessel shell and a fishing gear.

A method for producing a substrate with an antifouling coating film according to the present invention comprises the following steps (A) and (B):
step (A) : forming a coating film on a substrate using the antifouling coating composition described above; and
step (B) : curing the coating film formed in the step (A) .

A method for preventing a substrate from fouling according to the present invention comprises the following steps (A) and (B) :
step (A) : forming a coating film on the substrate using the antifouling coating composition described above; and
step (B) : curing the coating film formed in the step (A) .

### ADVANTAGEOUS EFFECTS OF INVENTION

The use of the antifouling coating compositions of the present invention makes it possible to produce antifouling coating films which exhibit excellent coating film consumption degree and antifouling properties over a long period, have excellent coating film properties such as weather resistance, and attain a reduced amount of bubbles (blisters) even when applied onto degraded coating films.

### DESCRIPTION OF EMBODIMENTS

### [Antifouling coating compositions]

An antifouling coating composition according to the present invention (hereinafter, also written as the "inventive composition") includes a hydrolyzable polymer (A), a versatic acid (B), and an antifouling agent component (C).

The inventive composition can give antifouling coating films which exhibit excellent coating film consumption degree and antifouling properties over a long period, have excellent coating film properties such as weather resistance, and, even when applied onto degraded coating films, in particular, onto porous coating films, attain a reduced amount of bubbles (blisters) and achieve excellent damage resistance and weather resistance.

### 〈Hydrolyzable polymers (A)〉

The inventive composition includes, as a resin component, a hydrolyzable polymer (A) having decomposability in the presence of water such as in seawater (hereinafter, also written simply as the "polymer (A)").

The polymer (A) is not particularly limited as long as it includes at least one polymer selected from the group consisting of a polymer (A1) having a structural unit represented by the aforementioned formula (1) and a polymer (A2) having a structural unit represented by the aforementioned formula (2). For reasons such as that the obtainable antifouling coating films exhibit higher damage resistance and higher coating film drying properties and attain a reduced amount of bubbles (blisters), it is preferable that a polymer (A1) be included.

A single, or two or more kinds of polymers (A) may be used.

### Polymers (A1)

The polymer (A1) is not particularly limited as long as it has structural units represented by the formula (1). A metal salt bond-containing copolymer (A1-1) (hereinafter, also written as the "copolymer (A1-1)") is preferable.

The copolymer (A1-1) is preferably a copolymer which has a structural unit derived from a monomer (a1) represented by the formula (I) : CH₂=C(R¹) -COO-M-O-CO-C(R¹) =CH₂ [in the formula (I), M is zinc or copper, and R¹ independently at each occurrence is a hydrogen atom or a methyl group] and a structural unit derived from an unsaturated monomer (a2) copolymerizable with the monomer (a1).

These structural units in the copolymer (A1-1) each may be of a single type, or of two or more types.

Specifically, examples of the monomers (a1) include zinc diacrylate, zinc dimethacrylate, copper diacrylate and copper dimethacrylate. These monomers (a1) may be used singly, or two or more may be used.

The monomer (a1) may be synthesized by a known method, for example, by heating an inorganic metal compound (such as an oxide, hydroxide or chloride of zinc or copper) and a (meth) acrylic acid or an ester compound thereof in the presence of an alcoholic organic solvent and water at a temperature of not more than the decomposition temperature of the metal salt while performing stirring.

In the invention, "(meth)acrylic acid" and "(meth) acrylate" are collective terms indicating acrylic acid and methacrylic acid, and acrylate and methacrylate, respectively.

Examples of the structural units derived from the monomer (a1) include structural units represented by the following formula (1) : 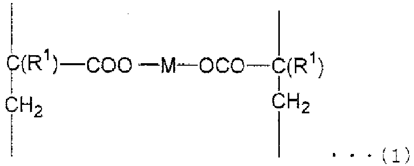 [In the formula (1), M is zinc or copper, and R¹ independently at each occurrence is a hydrogen atom or a methyl group.]

The unsaturated monomer (a2) may be selected appropriately from various compounds known as polymerizable unsaturated monomers which are copolymerizable with acrylic compounds. Preferred unsaturated monomers (a2) are, among others, alkyl (meth)acrylates, alkoxyalkyl (meth)acrylates and hydroxyalkyl (meth)acrylates. Particularly preferred compounds are, among others, methyl (meth)acrylate, ethyl (meth)acrylate, butyl (meth)acrylate, 2-methoxyethyl (meth)acrylate, 3-methoxybutyl (meth)acrylate and 2-hydroxyethyl (meth)acrylate.

Another example of the unsaturated monomers (a2) is a monobasic acid metal (meth)acrylate represented by the following formula (II) :

CH₂=C(R³)-COO-M-O-COR² ··· (II)

[In the formula (II), M is zinc or copper, R² is an organic group, and R³ is a hydrogen atom or a methyl group.]

R² is preferably a saturated or unsaturated aliphatic hydrocarbon group having 2 to 30 carbon atoms, a saturated or unsaturated alicyclic hydrocarbon group having 3 to 30 carbon atoms, an aromatic hydrocarbon group having 6 to 30 carbon atoms, or a group resulting from partial substitution of any of these groups with a substituent; and is more preferably a saturated or unsaturated aliphatic hydrocarbon group having 9 to 20 carbon atoms, a saturated or unsaturated alicyclic hydrocarbon group having 3 to 20 carbon atoms, or a group resulting from partial substitution of any of these groups with a substituent. Examples of the substituents include a hydroxyl group.

R² is preferably an organic acid residue derived from a monobasic acid, and is preferably a residue of at least one monobasic acid (R²COOH) selected from the group consisting of versatic acid, palmitic acid, stearic acid, isostearic acid, oleic acid, cis-9, cis-12-octadecadienoic acid (linoleic acid), 9, 12, 15-octadecatrienoic acid (linolenic acid), abietic acid, neoabietic acid, pimaric acid, dehydroabietic acid, 12-hydroxystearic acid and naphthenic acid.

Examples of the unsaturated monomers (a2) further include styrene and derivatives thereof; vinyl esters such as vinyl acetate and vinyl propionate; (meth)acrylamide and derivatives thereof; and (meth)acrylonitrile.

The unsaturated monomers (a2) may be used singly, or two or more may be used.

The polymer (A1) may be synthesized by a known method using the monomer (a1) or preferably using the monomer (a1) and the unsaturated monomer (a2).

### Polymers (A2)

The polymer (A2) is not particularly limited as long as it has structural units represented by the aforementioned formula (2). This polymer is different from the polymers (A1) . Preferably, this polymer is a polymer (S) which has at least one structure represented by the formula (3) below (a metal carboxylate) in a side chain of a carboxyl group-containing copolymer (S1) described below, or is a polymer (T) which has a structural unit derived from a monobasic acid metal (meth)acrylate represented by the aforementioned formula (II).

-M-O-COR² ··· (3)

[In the formula (3), M is zinc or copper, and R² is an organic group, with examples and preferred examples being similar to those of R² in the aforementioned formula (II). R² is in the polymer (A2) may be the same as or different from one another.]

### (Carboxyl group-containing copolymers (S1))

The carboxyl group-containing copolymer (S1) (hereinafter, also written as the "copolymer (S1)") is preferably a polymer which includes a structural unit derived from an unsaturated carboxylic acid monomer (s1) and a structural unit derived from an unsaturated monomer (s2) copolymerizable with the unsaturated carboxylic acid monomer (s1).

These structural units in the copolymer (S1) each may be of a single type, or of two or more types.

The unsaturated carboxylic acid monomers (s1) may be any known monobasic acid monomers, polybasic acid monomers and other monomers as long as the compounds have a carboxyl group and a polymerizable double bond. Specific examples include monobasic acids (monocarboxylic acids) such as (meth)acrylic acid, 2-(meth)acryloyloxyethylsuccinic acid, 2-(meth)acryloyloxyethylphthalic acid, 2-(meth)acryloyloxypropyl tetrahydrohydrogen phthalate and 2-(meth)acryloyloxypropyl hexahydrohydrogen phthalate; monoesters of dibasic acids such as monomethyl itaconate, monoethyl citraconate and monoisopropyl maleate; and polybasic acids such as maleic acid, fumaric acid, itaconic acid and citraconic acid. The unsaturated carboxylic acid monomers (s1) may be dimers, trimers, oligomers and the like which are formed by the Michael addition of the above monomers.

Of the unsaturated carboxylic acid monomers, (meth) acrylic acid is particularly preferable. That is, it is preferable that the copolymer (S1) have at least structural units derived from acrylic acid or methacrylic acid.

Examples of the unsaturated monomers (s2) copolymerizable with the unsaturated carboxylic acid monomers (s1) include those monomers mentioned hereinabove as the unsaturated monomers (a2).

From points of view such as the water resistance and long-term antifouling properties of the obtainable antifouling coating films, the content of the structural units derived from the unsaturated carboxylic acid monomer (s1) is preferably 5 to 50 wt%, more preferably 10 to 40 wt%, and particularly preferably 15 to 35 wt% of the copolymer (S1). The balance is the content of the structural units derived from the unsaturated monomer (s2); specifically, the content is preferably 95 to 50 wt%, more preferably 90 to 60 wt%, and particularly preferably 85 to 65 wt%.

The polymer (S) may be produced by any method. For example, (a) the monomer (s1) and the unsaturated monomer (s2) may be polymerized, and the resultant resin may be reacted with a monobasic acid and a metal compound, or (b) the monomer (s1) may be reacted with a metal compound and a monobasic acid, or the monomer (s1) may be reacted with a metal salt of a monobasic acid, and the resultant metal-containing unsaturated monomer may be polymerized with the unsaturated monomer (s2).

The metal compounds are not particularly limited. Examples thereof include metal oxides, hydroxides, chlorides, sulfides, basic carbonate salts and metal acetate salts.

### (Polymers (T))

The polymer (T), which has a structural unit derived from a monobasic acid metal (meth)acrylate represented by the aforementioned formula (II), is preferably a copolymer which has a structural unit derived from a monobasic acid metal (meth) acrylate represented by the aforementioned formula (II) and a structural unit derived from an unsaturated monomer (a2') copolymerizable with the monobasic acid metal (meth)acrylate.

These structural units in the polymer (T) each may be of a single type, or of two or more types.

Here, examples of the monobasic acid metal (meth)acrylates include those compounds described as the monobasic acid metal (meth)acrylates represented by the formula (II) in the section of the polymers (A1), and examples of the unsaturated monomers (a2') include those compounds described as the unsaturated monomers (a2) in the section of the polymers (A1) (except the monobasic acid metal (meth)acrylates represented by the formula (II)).

The polymer (T) may be synthesized by a known method using the monobasic acid metal (meth)acrylate described above, or preferably using the monobasic acid metal (meth)acrylate and the unsaturated monomer (a2').

### ·Properties and other characteristics of polymers (A)

For reasons such as that the obtainable antifouling coating films attain still enhanced coating film consumption degree and antifouling properties, the content of zinc and/or copper in the polymer (A) is preferably 0.5 to 25 wt%, and more preferably 1 to 20 wt% of the polymer (A). The content of zinc and/or copper may be measured with an ICP emission analyzer and may be adjusted by controlling the proportions of the monomers used in the synthesis of the polymer (A).

The rate of dissolution into water of an antifouling coating film obtained using the polymer (A) (the rate of the hydrolysis of the coating film) tends to be controlled to a desired value by controlling the content of groups represented by -COO-M-OCO- in the polymer (A). The content of such groups may be regarded as equivalent to the acid value measured by a method similar to the general acid value determination method using the polymer (A). The acid value measured by a method similar to the general acid value determination method using the polymer (A) is preferably 50 to 250 mgKOH/g. If the acid value is below 50 mgKOH/g, the amount of the metal in the polymer (A) may be so small that an antifouling coating film obtained using the composition including the polymer may exhibit poor antifouling properties. If the acid value exceeds 250 mgKOH/g, the antifouling coating film may be dissolved at so high a rate that the coating film tends to fail to attain long-term antifouling properties.

For reasons such as that the obtainable antifouling coating films attain stable coating film consumption degree over a long period and exhibit excellent long-term antifouling properties and excellent weather resistance, the inventive composition preferably includes the polymer (A) in an amount of 1 to 50 wt%, more preferably 3 to 40 wt%, and still more preferably 5 to 35 wt% in 100 wt% of the composition.

The number average molecular weight (Mn: polystyrene-equivalent value) and the weight average molecular weight (Mw: polystyrene-equivalent value) of the polymer (A) may be controlled appropriately in consideration of factors such as the viscosity and storage stability of the antifouling coating composition, and the rate of dissolution of the obtainable antifouling coating films. The Mn is usually 1,000 to 100,000, and preferably 1,000 to 50,000, and the Mw is usually 1,000 to 200,000, and preferably 1,000 to 100,000.

Specifically, the Mn and the Mw may be measured by the method described later in Examples.

### (Versatic acid (B))

The inventive composition includes versatic acid as a tertiary carboxylic acid component (B). By using versatic acid in combination with the polymer (A) and the antifouling agent component (C), in particular, the polymer (A1) and (C1) described later, the obtainable antifouling coating films exhibit stable coating film consumption degree and excellent long-term antifouling effects, have excellent coating film properties such as damage resistance and weather resistance, and, even when applied onto a degraded coating film, in particular, onto a porous coating film, attain a reduced amount of bubbles (blisters).

Versatic acid is liquid at room temperature and, when used in combination with the polymer (A) and the antifouling agent component (C), in particular, the polymer (A1) and (C1) described later, ensures that the drying properties of a coating film as a whole are enhanced while the surface drying of the coating film immediately after the coating film operation is retarded, that the obtainable antifouling coating film attains enhancements in bubble (blister) resistance and damage resistance, and that the antifouling coating film is resistant to troubles during outdoor exposure such as discoloration and hairline cracks on the surface of the antifouling coating film. These effects are not a simple addition of the respective effects of the polymer (A) and the components (B) and (C), but are synergetic effects that are produced only when these components are used in combination.

While rosin is an example monobasic acid similar to versatic acid, the above synergetic effects cannot be obtained even if rosin is used in combination with the polymer (A) and the antifouling agent component (C) without involving versatic acid.

For reasons such as that the obtainable antifouling coating film attains excellent and well-balanced coating film consumption degree, antifouling properties, damage resistance, weather resistance and bubble (blister) resistance, the content of the versatic acid (B) in the inventive composition is preferably 0.1 to 10 wt% in 100 wt% of the inventive composition. For reasons such as that the obtainable antifouling coating film achieves higher bubble (blister) resistance, the content is more preferably 0.1 to 5 wt%, and still more preferably 0.5 to 5 wt%.

For reasons such as that the obtainable antifouling coating film attains excellent and well-balanced coating film consumption degree, antifouling properties, damage resistance, weather resistance and bubble (blister) resistance, the content of the versatic acid (B) in the inventive composition is preferably 0.5 to 50 parts by weight, and more preferably 0.5 to 40 parts by weight per 100 parts by weight of the polymer (A).

For reasons such as that the obtainable antifouling coating film attains still enhanced coating film consumption degree and antifouling properties, the content of the versatic acid (B) in the inventive composition is preferably 1 to 500 parts by weight, more preferably 1 to 300 parts by weight, and particularly preferably 2 to 200 parts by weight per 100 parts by weight of (C1) described later.

### 〈Antifouling agent components (C)〉

The inventive composition may contain a known antifouling agent as the antifouling agent component (C). For reasons such as that the obtainable antifouling coating film attains excellent and well-balanced coating film consumption degree, antifouling properties, damage resistance, weather resistance and bubble (blister) resistance, the composition preferably contains 4-bromo-2-(4-chlorophenyl)-5-(trifluoromethyl)-1H-pyrrole-3-carbonitrile (C1).

Particularly, the use of (C1) is advantageous in that the obtainable antifouling coating film tends not only to exhibit excellent antifouling properties but also to have a constant coating film consumption degree.

For reasons such as that the obtainable antifouling coating film attains higher long-term antifouling properties, the content of (C1), when present in the inventive composition, is preferably 1 to 500 parts by weight, more preferably 5 to 450 parts by weight, and particularly preferably 5 to 300 parts by weight per 100 parts by weight of the polymer (A).

Where necessary, the inventive composition may contain an antifouling agent other than (C1) as an antifouling agent component (C).

Examples of the antifouling agents other than (C1) include inorganic antifouling agents such as inorganic copper compounds, for example, cuprous oxide, copper rhodanide and copper powder; and organic antifouling agents such as copper pyrithione, zinc pyrithione, 4,5-dichloro-2-n-octyl-4-isothiazolin-3-one (for example: SEA-NINE® 211N (manufactured by Rohm & Haas Japan)), triphenylboron pyridine salt, N,N-dimethyldichlorophenylurea, 2,4,6-trichlorophenylmaleimide, 2-methylthio-4-tert-butylamino-6-cyclopropyl-s-triazine, 2,4,5,6-tetrachloroisophthalonitrile, bisdimethyldithiocarbamoyl zinc ethylenebisdithiocarbamate, chloromethyl-n-octyl disulfide, N,N'-dimethyl-N'-phenyl-(N-fluorodichloromethylthio)sulfam ide, tetraalkylthiuram disulfide, zinc dimethyl dithiocarbamate, zinc ethylenebisdithiocarbamate, 2,3-dichloro-N-(2',6'-diethylphenyl)maleimide and 2,3-dichloro-N-(2'-ethyl-6'-methylphenyl)maleimide. Of these, cuprous oxide, copper pyrithione, zinc pyrithione, 4,5-dichloro-2-n-octyl-4-isothiazolin-3-one and triphenylboron pyridine salt are preferable for reasons such as that the obtainable antifouling coating film attains excellent coating film consumption degree and antifouling properties.

One or more of the above antifouling agents may be used.

For reasons such as that the obtainable antifouling coating film attains higher long-term antifouling properties, the content of the component (C) in the inventive composition is preferably 1 to 500 parts by weight, more preferably 5 to 450 parts by weight, and particularly preferably 10 to 400 parts by weight per 100 parts by weight of the polymer (A).

### 〈Other components〉

In addition to the components described hereinabove, the inventive composition may contain other components generally used in coating compositions, such as colorants, extender pigments, dehydrating agents, plasticizers, thixotropic agents, additional resins other than the polymers (A), additional organic acids other than the versatic acid (B), and solvents. These components may be used singly, or two or more may be used.

### Colorants

Examples of the colorants which may be added to the inventive composition include inorganic pigments such as red iron oxide, titanium white (titanium oxide) and yellow iron oxide, and organic pigments such as carbon black, naphthol red and phthalocyanine blue. These pigments may be used singly, or two or more may be used. Other colorants such as dyes may also be used.

The amount of the colorants may be controlled appropriately. For example, the amount is 0.05 to 125 parts by weight per 100 parts by weight of the polymer (A).

### Extender pigments

Extender pigments are such pigments that have a low refractive index and, when kneaded with oils or varnishes, are transparent and do not conceal the coated surface. Examples of the extender pigments which may be added to the inventive composition include talc, silica, mica, clay, zinc oxide, aluminum hydroxide, magnesium carbonate, barium carbonate, barium sulfate, zinc sulfide, calcium carbonate also used as an anti-settling agent, kaolin, alumina white, and white carbon also used as a delustering agent. Of these, zinc oxide, talc, silica, mica, clay, calcium carbonate, kaolin and barium sulfate are preferable. These extender pigments may be used singly, or two or more may be used.

The amount of the extender pigments may be controlled appropriately. For example, the amount is 0.5 to 300 parts by weight per 100 parts by weight of the polymer (A).

### Dehydrating agents

Dehydrating agents are components that contribute to enhancing the storage stability of the inventive composition. Examples of the dehydrating agents which may be added to the inventive composition include anhydrous gypsum, hemihydrate gypsum (calcined gypsum) and synthetic zeolite adsorbents (such as "Molecular Sieve" (trade name)), and further include ortho esters (such as methyl orthoformate, methyl orthoacetate and orthoborate esters), silicates and isocyanates. In particular, anhydrous gypsum and hemihydrate gypsum (calcined gypsum) which are inorganic dehydrating agents are preferable. These dehydrating agents may be used singly, or two or more may be used.

The amount of the dehydrating agents may be controlled appropriately. For example, the amount is 0.5 to 25 parts by weight per 100 parts by weight of the polymer (A).

### Plasticizers

Plasticizers are components that contribute to enhancing the crack resistance and water resistance of the antifouling coating films and to suppressing discoloration of the antifouling coating films. Examples of the plasticizers which may be added to the inventive composition include n-paraffins, chlorinated paraffins, terpene phenols, tricresyl phosphate (TCP) and polyvinyl ethyl ethers. Of these, chlorinated paraffins and terpene phenols are preferable, and chlorinated paraffins are particularly preferable. These plasticizers may be used singly, or two or more may be used. A commercial n-paraffin which may be used is "n-paraffin" manufactured by Nippon Petrochemicals Co., Ltd. Some commercial chlorinated paraffins which may be used are "TOYOPARAX® A-40/A-50/A-70/A-145/A-150" manufactured by TOSOH CORPORATION.

The amount of the plasticizers may be controlled appropriately. For example, the ratio thereof is 1 to 5 wt% relative to all the solids in the inventive composition.

### Thixotropic agents (anti-sagging anti-settling agents)

Examples of the anti-sagging anti-settling agents (thixotropic agents) which may be used in the invention include organic clay compounds (such as amine salts, stearate salts, lecithin salts and alkylsulfonate salts of Al, Ca or Zn), organic waxes (such as polyethylene waxes, oxidized polyethylene waxes, polyamide waxes, amide waxes and hydrogenated castor oil waxes) and synthetic powdery silica. Of these, organic clay compounds, polyamide waxes, oxidized polyethylene waxes, amide waxes and synthetic powdery silica are preferable. These thixotropic agents may be used singly, or two or more may be used.

The amount of the thixotropic agents may be controlled appropriately. For example, the amount is 0.25 to 50 parts by weight per 100 parts by weight of the polymer (A).

### Additional resins

Where necessary, the inventive composition may contain one, or two or more kinds of additional resins other than the polymers (A).

Examples of such resins include metal salt bond-free acrylic resins, acrylic silicone resins, polyester resins, unsaturated polyester resins, fluororesins, polybutene resins, silicone rubbers, polyurethane resins, epoxy resins, polyamide resins, vinyl resins (such as vinyl chloride copolymers, ethylene-vinyl acetate copolymers), chlorinated rubbers, chlorinated olefin resins, styrene-butadiene copolymer resins, ketone resins, alkyd resins, coumarone resins, terpene phenol resins, water-insoluble or poorly water-soluble resins such as petroleum resins, and water-soluble resins such as pine tars and rosins (gum rosin, wood rosin, tall oil rosin).

### Additional organic acids

Where necessary, the inventive composition may contain one, or two or more kinds of additional organic acids other than the versatic acid (B).

Examples of such organic acids include monobasic organic acids such as naphthenic acid and triphenylisobutenylcyclohexenecarboxylic acid ("A-3000" manufactured by YASUHARA CHEMICAL CO., LTD.).

### Solvents

Similarly to usual antifouling coating compositions, the inventive composition is preferably a solution or a dispersion of the aforementioned components in a solvent. In the present invention, solvents commonly used for antifouling coatings may be used, with examples including aliphatic solvents, aromatic solvents (such as xylene and toluene), ketone solvents (such as methyl isobutyl ketone and cyclohexanone), ester solvents, ether solvents (such as propylene glycol monomethyl ether and propylene glycol monomethyl ether acetate) and alcohol solvents (such as isopropyl alcohol and n-butanol).

The amount of the solvents may be controlled appropriately. For example, the amount is such that the proportion of all the solids in the inventive composition will be 20 to 90 wt%, and the amount may be controlled at the time of coating operation in accordance with workability.

### [Methods for production and use applications of antifouling coating compositions]

The inventive composition may be prepared by using techniques such as a device, a tool and the like which are similar to those by which general known antifouling coatings are produced. For example, the composition may be produced by preparing the polymer (A) first, adding the polymer obtained (the reaction liquid), the components (B) and (C), and optionally other components into the solvent at once or sequentially, and mixing the mixture by stirring.

The inventive composition may be used in a manner similar to that in which general known antifouling coating compositions are used. For example, the inventive composition may be spread on a surface of a substrate, in particular, a surface of a substrate that is brought into constant or intermittent contact with seawater or freshwater, for example, a surface of an underwater structure, a marine vessel shell or a fishing gear such as a fishnet to form a coating film. Specifically, the inventive composition may be applied to the substrate, or the substrate may be dipped into the inventive composition, and the composition may be cured to form a cured antifouling coating film on the surface of the substrate. The thus-formed antifouling coating film covering the surface of the substrate can prevent the substrate from fouling by foulers such as aquatic organisms over a long period. The (dry) film thickness of the antifouling coating film may be selected appropriately in consideration of factors such as coating film consumption rate. For example, the thickness may be 40 to 200 µm/coating operation.

### EXAMPLES

Hereinbelow, the present invention will be described in greater detail based on Examples without limiting the scope of the invention to such Examples. In the following, "part(s)" indicates part(s) by weight as long as such a reference is not against the spirit of the invention.

### 〈Solid content〉

In the invention, the term solid content means the content of a residue from a wet product including a solvent and the like, such as a mixture or a composition, specifically, a residue resulting from the evaporation of such a solvent and the like by drying in a hot air dryer at 105°C for 3 hours.

### 〈Measurement of number average molecular weight (Mn) and weight average molecular weight (Mw)〉

The Mn and the Mw of polymers obtained in the following were measured by gel permeation chromatography (GPC) using measuring device "HLC®-8120GPC" manufactured by TOSOH CORPORATION, two separation columns (α-M) "TSK-gel® α type" manufactured by TOSOH CORPORATION, and dimethylformamide (DMF) containing 20 mM LiBr as an eluting solution. The Mn and the Mw were obtained relative to polystyrene standards.

### (Conditions for measurement of Gardner viscosity)

The Gardner viscosity of polymers obtained in the following was measured at 25°C.

### [Preparation Example 1] Production of metal atom-containing polymerizable monomer mixture (a1-1)

A four-necked flask equipped with a condenser, a thermometer, a dropping funnel and a stirrer was loaded with 59.9 parts of propylene glycol monomethyl ether (PGM) and 40.7 parts of zinc oxide. The mixture was heated to 75°C while performing stirring. Subsequently, a mixture including 43 parts of methacrylic acid, 36 parts of acrylic acid and 5 parts of water was dropped through the dropping funnel at a constant rate in 3 hours. The mixture was stirred for 2 hours, and 29.4 parts of PGM was added. A transparent metal atom-containing polymerizable monomer mixture (a1-1) was thus obtained. The solid content was 55.1 wt%.

### [Preparation Example 2] Production of metal atom-containing polymerizable monomer mixture (a1-2)

A four-necked flask equipped with a condenser, a thermometer, a dropping funnel and a stirrer was loaded with 85.4 parts of PGM and 40.7 parts of zinc oxide. The mixture was heated to 75°C while performing stirring. Subsequently, a mixture including 43.1 parts of methacrylic acid, 36.1 parts of acrylic acid and 5 parts of water was dropped through the dropping funnel at a constant rate in 3 hours. The mixture was stirred for 2 hours, and 36 parts of PGM was added. A transparent metal atom-containing polymerizable monomer mixture (a1-2) was thus obtained. The solid content was 44.8 wt%.

### [Production Example 1] Production of hydrolyzable copolymer composition (A1-1-1)

A pressure polymerization autoclave equipped with a condenser, a thermometer, a dropping tank and a stirrer was loaded with 10 parts of PGM, 35 parts of xylene and 4 parts of ethyl acrylate. While performing stirring, the pressure was increased to 350 kPa and the temperature to 135°C. Subsequently, a transparent mixture including 15 parts of methyl methacrylate, 48 parts of ethyl acrylate, 15 parts of n-butyl acrylate, 40 parts of the metal atom-containing polymerizable monomer mixture (a1-1), 10 parts of xylene, 1.8 parts of a chain transfer agent (NOFMER® MSD manufactured by NOF CORPORATION), 4 parts of 2,2'-azobisisobutyronitrile (AIBN) and 2 parts of 2,2'-azobis(2-methylbutyronitrile) (AMBN) was dropped through the dropping tank at a constant rate in 2.5 hours. After the completion of the dropwise addition, the mixture was cooled to 110°C in 30 minutes, and 0.5 part of t-butyl peroxyoctoate and 5 parts of xylene were dropped over a period of 30 minutes. The mixture was stirred for 1 hour and 30 minutes, and thereafter 3 parts of xylene was added. The resultant mixture was filtered through a 118.1 meshes/cm (300 mesh) filter to give a light yellow transparent filtrate (a hydrolyzable copolymer composition (A1-1-1)) as a perfect solution with a solid content of 55.3 wt% and a Gardner viscosity rating of R.

The Mw and the Mn of the copolymer present in the hydrolyzable copolymer composition (A1-1-1) were 3200 and 1150, respectively.

### [Production Example 2] Production of hydrolyzable copolymer composition (A1-1-2)

A four-necked flask equipped with a condenser, a thermometer, a dropping funnel and a stirrer was loaded with 10 parts of PGM, 37 parts of xylene and 4 parts of ethyl acrylate. The mixture was heated to 100°C while performing stirring. Subsequently, a transparent mixture including 15 parts of methyl methacrylate, 52 parts of ethyl acrylate, 8 parts of n-butyl acrylate, 47 parts of the metal atom-containing polymerizable monomer mixture (a1-1), 10 parts of xylene, 2 parts of a chain transfer agent (NOFMER® MSD manufactured by NOF CORPORATION), 3 parts of AIBN and 8 parts of AMBN was dropped through the dropping funnel at a constant rate in 2.5 hours. After the completion of the dropwise addition, 0.5 part of t-butyl peroxyoctoate and 7 parts of xylene were dropped over a period of 30 minutes. The mixture was stirred for 1 hour and 30 minutes, and thereafter 3 parts of xylene was added. The resultant mixture was filtered through a 118.1 meshes/cm (300 mesh) filter to give a light yellow transparent filtrate (a hydrolyzable copolymer composition (A1-1-2)) as a perfect solution with a solid content of 54.8 wt% and a Gardner viscosity rating of R.

The Mw and the Mn of the copolymer present in the hydrolyzable copolymer composition (A1-1-2) were 3100 and 1200, respectively.

### [Production Example 3] Production of hydrolyzable copolymer composition (A1-1-3)

A four-necked flask equipped with a condenser, a thermometer, a dropping funnel and a stirrer was loaded with 15 parts of PGM and 57 parts of xylene. The mixture was heated to 100°C while performing stirring. Subsequently, a transparent mixture including 1 part of methyl methacrylate, 66.2 parts of ethyl acrylate, 5.4 parts of 2-methoxyethyl acrylate, 52 parts of the metal atom-containing polymerizable monomer mixture (a1-2), 10 parts of xylene, 1 part of a chain transfer agent (NOFMER® MSD manufactured by NOF CORPORATION), 2.5 parts of AIBN and 7 parts of AMBN was dropped through the dropping funnel at a constant rate in 6 hours. After the completion of the dropwise addition, 0.5 part of t-butyl peroxyoctoate and 7 parts of xylene were dropped over a period of 30 minutes. The mixture was stirred for 1 hour and 30 minutes, and thereafter 4.4 parts of xylene was added. The resultant mixture was filtered through a 118.1 meshes/cm (300 mesh) filter to give a light yellow transparent filtrate (a hydrolyzable copolymer composition (A1-1-3)) as a perfect solution with a solid content of 45.6 wt% and a Gardner viscosity rating of Y.

The Mw and the Mn of the copolymer present in the hydrolyzable copolymer composition (A1-1-3) were 5200 and 1950, respectively.

### [Production Example 4] Production of hydrolyzable copolymer composition (A2-1)

A four-necked flask equipped with a condenser, a thermometer, a dropping funnel and a stirrer was loaded with 30 parts of PGM and 37 parts of xylene. The mixture was heated to 100°C while performing stirring. Subsequently, a mixture including 35 parts of versatic zinc methacrylate, 10 parts of 2-methoxyethyl acrylate, 30 parts of 3-methoxybutyl acrylate, 25 parts of ethyl acrylate and 10 parts of di-t-butyl peroxide was dropped through the dropping funnel at a constant rate in 2 hours. After the completion of the dropwise addition, 1 part of t-butyl peroxyoctoate and 10 parts of xylene were dropped over a period of 2 hours. The mixture was stirred for 2 hours and thereafter 10 parts of xylene was added. The resultant mixture was filtered through a 118.1 meshes/cm (300 mesh) filter to give a light yellow transparent filtrate (a hydrolyzable copolymer composition (A2-1)) as a perfect solution with a solid content of 53.9 wt% and a Gardner viscosity rating of Y.

The Mw and the Mn of the copolymer present in the hydrolyzable copolymer composition (A2-1) were 3600 and 1350, respectively.

### [Examples 1 to 23 and Comparative Examples 1 to 8] Production of antifouling coating compositions

As shown in the tables below (the values in the tables indicate parts by weight), the hydrolyzable copolymer compositions obtained in Production Examples, versatic acid (B), antifouling agent components (C) and other components were mixed together uniformly at room temperature with a paint shaker to give antifouling coating compositions.

### [Testing of bubble resistance of antifouling coating films]

Sandblasted steel plates (300 mm in length × 100 mm in width × 3.2 mm in thickness) were coated with an epoxy antirust coating (epoxy AC coating, trade name "BANNOH® 500" manufactured by CHUGOKU MARINE PAINTS, LTD.) so that the dry film thickness thereof would be 150 µm. Thereafter, an epoxy binder coating (trade name "BANNOH® 500N" manufactured by CHUGOKU MARINE PAINTS, LTD.) was applied thereon so that the dry film thickness thereof would be 100 µm. Further, an antifouling coating (trade name "MARINE STAR® 20 KAI" manufactured by CHUGOKU MARINE PAINTS, LTD.) was applied thereon so that the dry film thickness would be 150 µm. The coating films were dried at room temperature for 7 days. Test plates with the antifouling coating film were thus fabricated. The above three coating operations were performed in 1 day/1 coat.

The test plates fabricated above were immersed in seawater in the Hiroshima Bay, Hiroshima, Japan, under static conditions for 24 months, and the surface was washed with running water and was dried naturally for 3 days, thereby preparing degraded test plates with the antifouling coating film. Thereafter, the antifouling coating compositions of Examples and Comparative Examples were applied one time onto the degraded antifouling coating films of the degraded test plates with the antifouling coating film so that the dry thickness of the new coating film would be 150 µm. Immediately after the application, the coated plates were dried outdoors under direct sunlight to promote the surface drying. After 1 hour after the application of the antifouling coating compositions, the surface of the antifouling coating films formed of the antifouling coating compositions was inspected to evaluate the degree of bubbles (blisters) under the following criteria.

### [Criteria for evaluation of bubble (blister) resistance]

5 Points: No bubbles (blisters) were found on the coating film surface.
4 Points: Bubbles were found on not more than 5% of the coating film surface.
3 Points: Bubbles were found on more than 5% to not more than 10% of the coating film surface.
2 Points: Bubbles were found on more than 10% to not more than 50% of the coating film surface.
1 Point: Bubbles were found on more than 50% to 100% of the coating film surface.

### [Testing of consumption degree of antifouling coating films]

With use of an applicator, the antifouling coating compositions of Examples and Comparative Examples were each applied to a 50 × 50 × 1.5 mm hard vinyl chloride plate so that the dry coating film thickness would be about 150 µm. The coating films were dried indoors at room temperature (about 20°C) for 7 days. Test plates were thus fabricated.

The test plates were mounted to the side of a rotary drum disposed in a thermostatic bath containing 25°C seawater. The rotary drum was rotated at a peripheral speed of 15 knots. The degree of consumption of the antifouling coating films (the amount of thickness loss, the loss relative to the film thickness of the antifouling coating film at the mounting of the test plate to the rotary drum) was measured every 3 months (after 3 months and after 6 months).

The coating film consumption degree of the antifouling coating film is preferably substantially constant. Specifically, the "thickness loss after 6 months/thickness loss after 3 months" is preferably in the range of about 1.8 to 2.6, and more preferably about 1.9 to 2.5.

### [Testing of static antifouling properties of antifouling coating films]

Sandblasted steel plates (300 mm in length × 100 mm in width × 3.2 mm in thickness) were coated with an epoxy antirust coating (epoxy AC coating, trade name "BANNOH® 500" manufactured by CHUGOKU MARINE PAINTS, LTD.) so that the dry film thickness thereof would be about 150 µm. Thereafter, an epoxy binder coating (trade name "BANNOH® 500N" manufactured by CHUGOKU MARINE PAINTS, LTD.) was applied thereon so that the dry film thickness thereof would be about 100 µm. Further, the antifouling coating composition from any of Examples and Comparative Examples was applied thereon one time so that the dry film thickness thereof would be about 100 µm. The coating films were dried at room temperature for 7 days. Test plates with the antifouling coating film were thus fabricated. The above three coating operations were performed in 1 day/1 coat.

The test plates fabricated above were immersed in seawater in the Hiroshima Bay, Hiroshima, Japan, under static conditions for 12 months. During this period, the area (%) fouled by marine organisms except slime on the surface of the antifouling coating films was measured every 3 months. The static antifouling properties of the antifouling coating films were evaluated under the following criteria.

### [Criteria for evaluation of static antifouling properties based on area fouled by marine organisms]

0: No marine organisms were attached.
0.5: The area fouled by marine organisms was above 0% and not more than 10%.
1: The area fouled by marine organisms was above 10% and not more than 20%.
2: The area fouled by marine organisms was above 20% and not more than 30%.
3: The area fouled by marine organisms was above 30% and not more than 40%.
4: The area fouled by marine organisms was above 40% and not more than 50%.
5: The area fouled by marine organisms was above 50%.

### [Surface condition of antifouling coating films after outdoor exposure]

Sandblasted steel plates (300 mm in length × 100 mm in width × 3.2 mm in thickness) were coated with an epoxy anti rust coating (epoxy AC coating, trade name "BANNOH® 500" manufactured by CHUGOKU MARINE PAINTS, LTD.) so that the dry film thickness thereof would be about 150 µm. Thereafter, an epoxy binder coating (trade name "BANNOH® 500N" manufactured by CHUGOKU MARINE PAINTS, LTD.) was applied thereon so that the dry film thickness thereof would be about 100 µm. Further, the antifouling coating composition from any of Examples and Comparative Examples was applied thereon one time so that the dry film thickness thereof would be about 100 µm. The coating films were dried at room temperature for 7 days. Test plates with the antifouling coating film were thus fabricated. The above three coating operations were performed in 1 day/1 coat.

The test plates fabricated above were exposed to outdoor, and the surface condition after 6 months was evaluated based on the following criteria.

### Evaluation criteria

A ··· Discoloration (whitening) and hairline cracks were absent.
B ··· Discoloration (whitening) was found.
C ··· Hairline cracks were found.

### [Damage resistance (coating film drying properties/pressure test (block pressure test))]

To 150 × 70 × 3.2 mm sandblasted steel plates, an epoxy anticorrosive coating (trade name "BANNOH® 500" manufactured by CHUGOKU MARINE PAINTS, LTD.) was applied so that the dry film thickness would be about 150 µm. The coating was dried at room temperature (about 20°C) for one day to form a coating film. The surface of the coating film was further coated with an epoxy binder coating (trade name "BANNOH® 500N" manufactured by CHUGOKU MARINE PAINTS, LTD.) so that the dry film thickness would be about 100 µm. The coating was dried at room temperature (about 20°C) for one day to form a coating film. The coating surface was subjected to two cycles of an operation in which the antifouling coating composition from any of Examples and Comparative Examples was applied so that the dry film thickness thereof would be about 160 µm, and the coating was dried at room temperature (about 20°C) for one day to form a coating film. In this manner, test plates having an antifouling coating film with a dry film thickness of about 320 µm were fabricated.

The test plates were further dried at room temperature, 23°C, for 1 day, 3 days, or 7 days. A 30 × 30 × 10 mm wood piece was placed on the antifouling coating film (a central portion), and a pressure of 40 kgf/cm² (3.9 MPa) was applied onto the wood piece in a direction perpendicular to the plane of the antifouling coating film for 20 minutes. The surface condition of the antifouling coating films was observed (the degree of deformation of the antifouling coating films was measured).

The coating films formed from the antifouling coating compositions of Examples, in particular, the coating films formed from the antifouling coating compositions obtained using the hydrolyzable copolymer compositions (A1-1-1) to (A1-1-3) were shown to have excellent damage resistance and coating film drying properties. In contrast, the coating films formed from the antifouling coating compositions of Comparative Examples were insufficient in damage resistance and coating film drying properties because of the absence of versatic acid.

**[Table 1]**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|
| Polymers (A) | | | | | | | | | | | | | | |
| Hydrolyzable copolymer composition (A1-1-1) | 55.3% Solid | | | | | | 32 | | 32 | | | | | |
| Hydrolyzable copolymer composition (A1-1-2) | 54.8% Solid | | | | | 32 | | | | | | | | 32 |
| Hydrolyzable copolymer composition (A1-1-3) | 45.6% Solid | 40 | 39 | 36 | 36 | | | 36 | | 36 | 36 | 36 | 30 | |
| Hydrolyzable copolymer composition (A2-1) | 53.9% Solid | | | | | | | | | | | | | |

| Component (B) | | | | | | | | | | | | | | |
|---|---|---|---|---|---|---|---|---|---|---|---|---|---|---|
| Versatic acid | | 0.1 | 0.5 | 2 | 2 | 2 | 2 | 2 | 2 | 2 | 2 | 2 | 2 | 2 |

| Components (C) | | | | | | | | | | | | | | |
|---|---|---|---|---|---|---|---|---|---|---|---|---|---|---|
| 4-Bromo-2-(4-chlorophenyl)-5-(trifluoromethyl)-1H-pyrrole-3-carbonitrile | | 5 | 5 | 5 | 5 | 5 | 5 | 5 | 5 | 5 | 5 | | | |
| Copper pyrithione | | 3 | 3 | | 3 | 3 | 3 | | | | | | | |
| Zinc pyrithione | | | | | | | | 3 | 3 | | | 5 | 2 | 3 |
| SEA-NINE® 211N | 30% Solid | | | | | | | | | 5 | | | | |
| Triphenylboron pyridine salt | | | | | | | | | | | 3 | 3 | | |
| Cuprous oxide | | | | | | | | | | | | | 40 | 20 |

| Other components | | | | | | | | | | | | | | |
|---|---|---|---|---|---|---|---|---|---|---|---|---|---|---|
| Chlorinated paraffin | | 2 | 2 | 2 | 2 | 2 | 2 | 2 | 2 | 2 | 2 | 2 | 2 | 2 |
| Talc | | 15 | 15 | 18 | 15 | 15 | 15 | 15 | 15 | 15 | 15 | 15 | 5 | 10 |
| Precipitated barium sulfate | | 8 | 8 | 8 | 8 | 8 | 8 | 8 | 8 | 8 | 8 | 8 | | 5 |
| Calcined gypsum | | 1 | 1 | 1 | 1 | 1 | 1 | 1 | 1 | 1 | 1 | 1 | 1 | 1 |
| Zinc oxide | | 15 | 15 | 15 | 15 | 15 | 15 | 15 | 15 | 15 | 15 | 15 | 5 | 10 |
| Red iron oxide | | 2 | 2 | 2 | 2 | 2 | 2 | 2 | 2 | 2 | 2 | 2 | 2 | 2 |
| Oxidized polyethylene wax | 20% Solid | 2 | 2 | 2 | 2 | 2 | 2 | 2 | 2 | 2 | 2 | 2 | 2 | 2 |
| Fatty acid amide wax | 20% Solid | 2 | 2 | 2 | 2 | 2 | 2 | 2 | 2 | 2 | 2 | 2 | 2 | 2 |
| n-butanol | | 4.9 | 5.5 | 7 | 7 | 11 | 11 | 7 | 11 | 5 | 7 | 7 | 7 | 9 |
| Total parts by weight | | 100 | 100 | 100 | 100 | 100 | 100 | 100 | 100 | 100 | 100 | 100 | 100 | 100 |
| | | | | | | | | | | | | | | |
| Bubble (blister) resistance | Appearance | 4 | 5 | 5 | 5 | 5 | 5 | 5 | 5 | 5 | 5 | 4 | 4 | 4 |
| Coating film consumability (25°C/15 knots) | 3 Months | 26.9 | 27.7 | 32.5 | 35.3 | 32. 9 | 33. 7 | 34. 7 | 34. 7 | 34. 1 | 33. 4 | 25. 4 | 30.5 | 30.5 |
| | 6 Months | 54.1 | 61.8 | 69.8 | 78.3 | 73. 7 | 80.9 | 78.1 | 83. 8 | 72. 3 | 72. 3 | 54.3 | 65. 3 | 65.7 |
| Static antifouling properties | 3 Months | 0 | 0 | 0 | 0 | 0 | 0 | 0 | 0 | 0 | 0 | 0 | 0 | 0 |
| | 6 Months | 0 | 0 | 0 | 0 | 0 | 0 | 0 | 0 | 0 | 0 | 0 | 0 | 0 |
| | 9 Months | 0 | 0 | 0 | 0 | 0 | 0 | 0 | 0 | 0 | 0 | 0 | 0 | 0 |
| | 12 Months | 1 | 0 | 0 | 0 | 0 | 0 | 0 | 0 | 0 | 0 | 1 | 1 | 1 |
| Surface condition after outdoor exposure | 6 Months | A | A | A | A | A | A | A | A | A | A | A | A | A |

**[Table 2]**

| | | Ex. 14 | Ex. 15 | Ex. 16 | Ex. 17 | Ex. 18 | Ex. 19 | Ex. 20 | Ex. 21 | Ex. 22 | Ex. 23 |
|---|---|---|---|---|---|---|---|---|---|---|---|
| Polymers (A) | | | | | | | | | | | |
| Hydrolyzable copolymer composition (A1-1-1) | 55.3% Solid | | | | | 32 | | | | | |
| Hydrolyzable copolymer composition (A1-1-2) | 54.8% Solid | | | | | | | | | | |
| Hydrolyzable copolymer composition (A1-1-3) | 45.6% Solid | 34 | 30 | 36 | 36 | | 34 | 31 | | | |
| Hydrolyzable copolymer composition (A2-1) | 53.9% Solid | | | | | | | | 32 | 32 | 32 |

| Component (B) | | | | | | | | | | | |
|---|---|---|---|---|---|---|---|---|---|---|---|
| Versatic acid | | 3 | 5 | 2 | 2 | 2 | 3 | 4 | 3 | 3 | 3 |

| Components (C) | | | | | | | | | | | |
|---|---|---|---|---|---|---|---|---|---|---|---|
| 4-Bromo-2-(4-chlorophenyl)-5-(trifluorome thyl)-1H-pyrrole-3-carbonitrile | | 5 | 5 | 1 | 3 | 3 | 7 | 10 | 5 | | |
| Copper pyrithione | | 3 | 3 | 2 | 6 | 6 | 2 | 2 | | 5 | |
| Zinc pyrithione | | | | | | | | | 3 | | 5 |
| SEA-NINE® 211N | 30% Solid | | | | | | | | | | |
| Triphenylboron pyridine salt | | | | | | | | | | 3 | 3 |
| Cuprous oxide | | | | | | | | | | | |

| Other components | | | | | | | | | | | |
|---|---|---|---|---|---|---|---|---|---|---|---|
| Chlorinated paraffin | | 2 | 2 | 2 | 2 | 2 | 2 | 2 | 2 | 2 | 2 |
| Talc | | 15 | 15 | 18 | 15 | 15 | 15 | 13 | 15 | 15 | 15 |
| Precipitated barium sulfate | | 8 | 8 | 8 | 8 | 8 | 8 | 8 | 8 | 8 | 8 |
| Calcined gypsum | | 1 | 1 | 1 | 1 | 1 | 1 | 1 | 1 | 1 | 1 |
| Zinc oxide | | 15 | 15 | 18 | 15 | 15 | 15 | 14 | 15 | 15 | 15 |
| Red iron oxide | | 2 | 2 | 2 | 2 | 2 | 2 | 2 | 2 | 2 | 2 |
| Oxidized polyethylene wax | 20% Solid | 2 | 2 | 2 | 2 | 2 | 2 | 2 | 2 | 2 | 2 |
| Fatty acid amide wax | 20% Solid | 2 | 2 | 2 | 2 | 2 | 2 | 2 | 2 | 2 | 2 |
| n-butanol | | 8 | 10 | 6 | 6 | 10 | 7 | 9 | 10 | 10 | 10 |
| Total parts by weight | | 100 | 100 | 100 | 100 | 100 | 100 | 100 | 100 | 100 | 100 |
| | | | | | | | | | | | |
| Bubble (blister) resistance | Appearance | 5 | 5 | 5 | 5 | 5 | 5 | 5 | 3 | 3 | 3 |
| Coating film consumability (25°C/15 knots) | 3 Months | 36.3 | 37. 9 | 31.5 | 34.4 | 33.2 | 37. 7 | 39.0 | 30.2 | 29.3 | 28.5 |
| | 6 Months | 80.7 | 76.5 | 70.3 | 77.2 | 80.1 | 85.6 | 88.2 | 66.6 | 63. 2 | 59.9 |
| Static antifouling properties | 3 Months | 0 | 0 | 0 | 0 | 0 | 0 | 0 | 0 | 0 | 0 |
| | 6 Months | 0 | 0 | 0 | 0 | 0 | 0 | 0 | 0 | 0 | 0 |
| | 9 Months | 0 | 0 | 0 | 0 | 0 | 0 | 0 | 0 | 0 | 0 |
| | 12 Months | 0 | 1 | 1 | 0 | 0 | 0 | 0 | 0 | 1 | 1 |
| Surface condition after outdoor exposure | 6 Months | A | A | A | A | A | A | A | A | A | A |

**[Table 3]**

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Polymers (A) | | | | | | | | | |
| Hydrolyzable copolymer composition (A1-1-1) | 55.3% Solid | | | | | | | | |
| Hydrolyzable copolymer composition (A1-1-2) | 54.8% Solid | | | 40 | 40 | | | | |
| Hydrolyzable copolymer composition (A1-1-3) | 45.6% Solid | 40 | 40 | | | 36 | 36 | | |
| Hydrolyzable copolymer composition (A2-1) | 53.9% Solid | | | | | | | 40 | 40 |

| Component (B) | | | | | | | | | |
|---|---|---|---|---|---|---|---|---|---|
| Versatic acid | | | | | | | | | |

| Components (C) | | | | | | | | | |
|---|---|---|---|---|---|---|---|---|---|
| 4-Bromo-2-(4-chlorophenyl)-5-(trifluorome thyl)-1H-pyrrole-3-carbonitrile | | | | | | | 5 | 6 | |
| Copper pyrithione | | 3 | | | | | 3 | | |
| Zinc pyrithione | | | | 4 | 5 | 3 | | 2 | 3 |
| SEA-NINE® 211N | 30% Solid | | 3 | | 3 | | | | |
| Triphenylboron pyridine salt | | 5 | 5 | | | 5 | | | |
| Cuprous oxide | | | | 5 | | | | | 5 |

| Other components | | | | | | | | | |
|---|---|---|---|---|---|---|---|---|---|
| Chlorinated paraffin | | 2 | 2 | 2 | 2 | 2 | 2 | 2 | 2 |
| Talc | | 15 | 15 | 15 | 15 | 15 | 15 | 15 | 15 |
| Precipitated barium sulfate | | 8 | 8 | 8 | 8 | 8 | 8 | 8 | 8 |
| Calcined gypsum | | 1 | 1 | 1 | 1 | 1 | 1 | 1 | 1 |
| Zinc oxide | | 15 | 15 | 15 | 15 | 15 | 15 | 15 | 15 |
| Red iron oxide | | 2 | 2 | 2 | 2 | 2 | 2 | 2 | 2 |
| Oxidized polyethylene wax | 20% Solid | 2 | 2 | 2 | 2 | 2 | 2 | 2 | 2 |
| Fatty acid amide wax | 20% Solid | 2 | 2 | 2 | 2 | 2 | 2 | 2 | 2 |
| Rosin | | | | | | 2 | 2 | | |
| n-butanol | | 5 | 5 | 4 | 5 | 7 | 7 | 5 | 5 |
| Total parts by weight | | 100 | 100 | 100 | 100 | 100 | 100 | 100 | 100 |
| | | | | | | | | | |
| Bubble (blister) resistance | Appearance | 1 | 1 | 1 | 1 | 2 | 2 | 1 | 1 |
| Coating film consumability (25°C/15 knots) | 3 Months | 25.4 | 31.2 | 30.9 | 18.9 | 23.1 | 25.3 | 28.0 | 29.3 |
| | 6 Months | 45.3 | 48.9 | 44.2 | 27.2 | 35.4 | 49.9 | 43.2 | 38.2 |
| Static antifouling properties | 3 Months | 2 | 2 | 2 | 1 | 2 | 0 | 1 | 2 |
| | 6 Months | 4 | 4 | 4 | 1 | 3 | 1 | 2 | 4 |
| | 9 Months | 4 | 4 | 4 | 3 | 4 | 1 | 3 | 4 |
| | 12 Months | 5 | 5 | 5 | 5 | 5 | 3 | 4 | 5 |
| Surface condition after outdoor exposure | 6 Months | B | B | B | B | B, C | B, C | B | B |

## Claims

1. An antifouling coating composition comprising:
a hydrolyzable polymer (A) including at least one selected from the group consisting of a polymer (A1) having a structural unit represented by the formula (1) below and a polymer (A2) having a structural unit represented by the formula (2) below,
a versatic acid (B), and
an antifouling agent component (C), 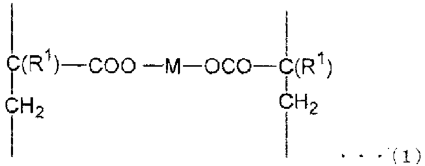
[in the formula (1), M is zinc or copper, and R¹ independently at each occurrence is a hydrogen atom or a methyl group]
-COO-M-O-COR² · · · (2)
[in the formula (2), M is zinc or copper, and R² is an organic group].

2. The antifouling coating composition according to Claim 1, wherein the antifouling agent component (C) includes 4-bromo-2-(4-chlorophenyl)-5-(trifluoromethyl)-1H-pyrrole-3-carbonitrile (C1).

3. The antifouling coating composition according to Claim 1 or 2, wherein the versatic acid (B) is present in a ratio of 0.1 to 10 wt% relative to 100 wt% of the antifouling coating composition.

4. The antifouling coating composition according to any one of Claims 1 to 3, wherein the versatic acid (B) is present in a ratio of 0.5 to 50 parts by weight per 100 parts by weight of the hydrolyzable polymer (A).

5. The antifouling coating composition according to any one of Claims 2 to 4, wherein the antifouling agent components (C) include an antifouling agent other than (C1).

6. The antifouling coating composition according to any one of Claims 1 to 5, further comprising at least one dehydrating agent selected from the group consisting of anhydrous gypsum, hemihydrate gypsum (calcined gypsum), a synthetic zeolite adsorbent, an ortho ester, a silicate and an isocyanate.

7. The antifouling coating composition according to any one of Claims 1 to 6, further comprising a chlorinated paraffin.

8. The antifouling coating composition according to any one of Claims 1 to 7, wherein the polymer (A1) includes a structural unit derived from a monomer (a1) represented by the formula (I): CH₂=C(R¹)-COO-M-O-CO-C(R¹)=CH₂ [in the formula (I), M is zinc or copper, and R¹ independently at each occurrence is a hydrogen atom or a methyl group] and a structural unit derived from an unsaturated monomer (a2) copolymerizable with the monomer (a1).

9. The antifouling coating composition according to Claim 8, wherein the monomer (a1) is at least one monomer selected from the group consisting of zinc diacrylate, zinc dimethacrylate, copper diacrylate and copper dimethacrylate.

10. The antifouling coating composition according to Claim 8 or 9, wherein the unsaturated monomer (a2) includes at least one unsaturated monomer selected from the group consisting of an alkyl (meth)acrylate, an alkoxyalkyl (meth)acrylate and a hydroxyalkyl (meth)acrylate.

11. The antifouling coating composition according to any one of Claims 8 to 10, wherein the unsaturated monomer (a2) includes at least one unsaturated monomer selected from the group consisting of methyl (meth)acrylate, ethyl (meth)acrylate, butyl (meth)acrylate, 2-methoxyethyl (meth)acrylate, 3-methoxybutyl (meth)acrylate and 2-hydroxyethyl (meth)acrylate.

12. The antifouling coating composition according to any one of Claims 1 to 11, wherein the content of zinc and/or copper in the polymer (A) is 0.5 to 25 wt% of the polymer (A).

13. An antifouling coating film formed from the antifouling coating composition according to any one of Claims 1 to 12.

14. A substrate with an antifouling coating film comprising the antifouling coating film according to Claim 13.

15. An antifouling substrate wherein a surface of a substrate to be or being in contact with seawater or freshwater is covered with the antifouling coating film according to Claim 13.

16. The antifouling substrate according to Claim 15, wherein the substrate to be or being in contact with seawater or freshwater is any of an underwater structure, a marine vessel shell and a fishing gear.

17. A method for producing a substrate with an antifouling coating film, comprising the following steps (A) and (B):
step (A): forming a coating film on a substrate using the antifouling coating composition according to any one of Claims 1 to 12; and
step (B): curing the coating film formed in the step (A).

18. A method for preventing a substrate from fouling, comprising the following steps (A) and (B):
step (A): forming a coating film on the substrate using the antifouling coating composition according to any one of Claims 1 to 12; and
step (B): curing the coating film formed in the step (A).

## Patentansprüche

1. Antifouling-Beschichtungszusammensetzung, umfassend:
ein hydrolysierbares Polymer (A), das mindestens eines, ausgewählt aus der Gruppe, bestehend aus einem Polymer (A1) mit einer durch die folgende Formel (1) dargestellten Struktureinheit und einem Polymer (A2) mit einer durch die folgende Formel (2) dargestellten Struktureinheit, einschließt,
eine Versatic-Säure (B) und
eine Antifoulingmittelkomponente (C), 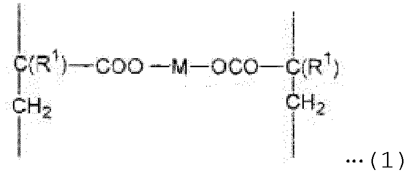
[in der Formel (1) ist M Zink oder Kupfer und R¹ ist unabhängig bei jedem Vorkommen ein Wasserstoffatom oder eine Methylgruppe]
-COO-M-O-COR² · · · (2)
[in der Formel (2) ist M Zink oder Kupfer und R² ist eine organische Gruppe].

2. Antifouling-Beschichtungszusammensetzung gemäß Anspruch 1, wobei die Antifoulingmittelkomponente (C) 4-Brom-2-(4-chlorphenyl)-5-(trifluormethyl)-1H-pyrrol-3-carbonitril (C1) einschließt.

3. Antifouling-Beschichtungszusammensetzung gemäß Anspruch 1 oder 2, wobei die Versatic-Säure (B) in einem Anteil von 0,1 bis 10 Gew.-%, relativ zu 100 Gew.-% der Antifouling-Beschichtungszusammensetzung, vorhanden ist.

4. Antifouling-Beschichtungszusammensetzung gemäß irgendeinem der Ansprüche 1 bis 3, wobei die Versatic-Säure (B) in einem Verhältnis von 0,5 bis 50 Gewichtsteile pro 100 Gewichtsteile des hydrolysierbaren Polymers (A) vorhanden ist.

5. Antifouling-Beschichtungszusammensetzung gemäß irgendeinem der Ansprüche 2 bis 4, wobei die Antifoulingmittelkomponenten (C) ein Antifoulingmittel außer (C1) einschließen.

6. Antifouling-Beschichtungszusammensetzung gemäß irgendeinem der Ansprüche 1 bis 5, ferner umfassend mindestens ein Dehydratisierungsmittel, ausgewählt aus der Gruppe, bestehend aus wasserfreiem Gips, Hemihydrat-Gips (calciniertem Gips), einem synthetischen Zeolith-Adsorptionsmittel, einem Orthoester, einem Silikat und einem Isocyanat.

7. Antifouling-Beschichtungszusammensetzung gemäß irgendeinem der Ansprüche 1 bis 6, ferner umfassend ein chloriertes Paraffin.

8. Antifouling-Beschichtungszusammensetzung gemäß irgendeinem der Ansprüche 1 bis 7, wobei das Polymer (A1) eine Struktureinheit, die von einem durch die Formel (I) dargestellten Monomer (a1) abgeleitet ist: CH₂=C(R¹)-COO-M-O-CO-C(R¹)=CH₂ [in der Formel (I) ist M Zink oder Kupfer und R¹ ist unabhängig bei jedem Vorkommen ein Wasserstoffatom oder eine Methylgruppe] und eine Struktureinheit, die von einem ungesättigten Monomer (a2) abgeleitet ist, das mit dem Monomer (a1) copolymerisierbar ist, einschließt.

9. Antifouling-Beschichtungszusammensetzung gemäß Anspruch 8, wobei das Monomer (a1) mindestens ein Monomer, ausgewählt aus der Gruppe, bestehend aus Zinkdiacrylat, Zinkdimethacrylat, Kupferdiacrylat und Kupferdimethacrylat, ist.

10. Antifouling-Beschichtungszusammensetzung gemäß Anspruch 8 oder 9, wobei das ungesättigte Monomer (a2) mindestens ein ungesättigtes Monomer, ausgewählt aus der Gruppe, bestehend aus einem Alkyl(meth)acrylat, einem Alkoxyalkyl(meth)acrylat und einem Hydroxyalkyl(meth)acrylat, einschließt.

11. Antifouling-Beschichtungszusammensetzung gemäß irgendeinem der Ansprüche 8 bis 10, wobei das ungesättigte Monomer (a2) mindestens ein ungesättigtes Monomer, ausgewählt aus der Gruppe, bestehend aus Methyl(meth)acrylat, Ethyl(meth)acrylat, Butyl(meth)acrylat, 2-Methoxyethyl(meth)acrylat, 3-Methoxybutyl(meth)acrylat und 2-Hydroxyethyl(meth)acrylat, einschließt.

12. Antifouling-Beschichtungszusammensetzung gemäß irgendeinem der Ansprüche 1 bis 11, wobei der Gehalt an Zink und/oder Kupfer in dem Polymer (A) 0,5 bis 25 Gew.-% des Polymers (A) beträgt.

13. Antifouling-Beschichtungsfilm, der aus der Antifouling-Beschichtungszusammensetzung gemäß irgendeinem der Ansprüche 1 bis 12 gebildet ist.

14. Substrat mit einem Antifouling-Beschichtungsfilm umfassend den Antifouling-Beschichtungsfilm gemäß Anspruch 13.

15. Antifouling-Substrat, wobei eine Oberfläche eines Substrats, das in Kontakt mit Meerwasser oder Süßwasser sein soll oder ist, mit dem Antifouling-Beschichtungsfilm gemäß Anspruch 13 bedeckt ist.

16. Antifouling-Substrat gemäß Anspruch 15, wobei das Substrat, das in Kontakt mit Meerwasser oder Süßwasser sein soll oder ist, irgendeine von einer Unterwasserstruktur, einem Mantel eines marinen Behälters und einem Angelgerät ist.

17. Verfahren zur Herstellung eines Substrats mit einem Antifouling-Beschichtungsfilm, umfassend die folgenden Schritte (A) und (B):
Schritt (A): Bildung eines Beschichtungsfilms auf einem Substrat unter Verwendung der Antifouling-Beschichtungszusammensetzung gemäß irgendeinem der Ansprüche 1 bis 12 und
Schritt (B): Härten des im Schritt (A) gebildeten Beschichtungsfilms.

18. Verfahren zur Vermeidung von Fouling an einem Substrat, umfassend die folgenden Schritte (A) und (B):
Schritt (A): Bildung eines Beschichtungsfilms auf einem Substrat unter Verwendung der Antifouling-Beschichtungszusammensetzung gemäß irgendeinem der Ansprüche 1 bis 12 und
Schritt (B): Härten des im Schritt (A) gebildeten Beschichtungsfilms.

## Revendications

1. Composition de revêtement antisalissure comprenant :
un polymère hydrolysable (A) incluant au moins l'un sélectionné dans le groupe consistant en un polymère (A1) ayant un motif de structure représenté par la formule (1) ci-dessous et un polymère (A2) ayant un motif de structure représenté par la formule (2) ci-dessous,
un acide versatique (B), et
un composant d'agent antisalissure (C), 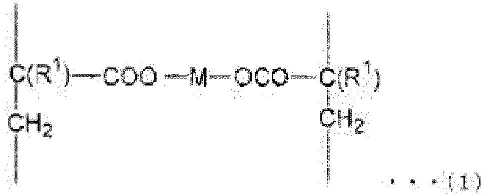
[dans la formule (1), M est un zinc ou un cuivre, et R¹ indépendamment à chaque occurrence est un atome d'hydrogène ou un groupe méthyle]
-COO-M-O-COR² · · · (2)
[dans la formule (2), M est un zinc ou un cuivre, et R² est un groupe organique].

2. Composition de revêtement antisalissure selon la revendication 1, dans laquelle le composant d'agent antisalissure (C) inclut le 4-bromo-2-(4-chlorophényl)-5-(trifluorométhyl)-1H-pyrrole-3-carbonitrile (C1).

3. Composition de revêtement antisalissure selon la revendication 1 ou 2, dans laquelle l'acide versatique (B) est présent à un rapport de 0,1 à 10 % en poids par rapport à 100 % en poids de la composition de revêtement antisalissure.

4. Composition de revêtement antisalissure selon l'une quelconque des revendications 1 à 3, dans laquelle l'acide versatique (B) est présent à un rapport de 0,5 à 50 parties en poids pour 100 parties en poids du polymère hydrolysable (A).

5. Composition de revêtement antisalissure selon l'une quelconque des revendications 2 à 4, dans laquelle les composants d'agent antisalissure (C) incluent un agent antisalissure autre que (C1).

6. Composition de revêtement antisalissure selon l'une quelconque des revendications 1 à 5, comprenant en outre au moins un agent déshydratant sélectionné dans le groupe consistant en un gypse anhydre, un gypse semi-hydraté (gypse calciné), un adsorbant à base de zéolithe synthétique, un ortho ester, un silicate et un isocyanate.

7. Composition de revêtement antisalissure selon l'une quelconque des revendications 1 à 6, comprenant en outre une paraffine chlorée.

8. Composition de revêtement antisalissure selon l'une quelconque des revendications 1 à 7, dans laquelle le polymère (A1) inclut un motif de structure dérivé d'un monomère (a1) représenté par la formule (I) : CH₂=C(R¹)-COO-M-O-CO-C(R¹)=CH₂ [dans la formule (I), M est un zinc ou un cuivre, et R¹ indépendamment à chaque occurrence est un atome d'hydrogène ou un groupe méthyle] et un motif de structure dérivé d'un monomère insaturé (a2) copolymérisable avec le monomère (a1).

9. Composition de revêtement antisalissure selon la revendication 8, dans laquelle le monomère (a1) est au moins un monomère sélectionné dans le groupe consistant en le diacrylate de zinc, le diméthacrylate de zinc, le diacrylate de cuivre et le diméthacrylate de cuivre.

10. Composition de revêtement antisalissure selon la revendication 8 ou 9, dans laquelle le monomère insaturé (a2) inclut au moins un monomère insaturé sélectionné dans le groupe consistant en un (méth)acrylate d'alkyle, un (méth)acrylate d'alcoxyalkyle et un (méth)acrylate d'hydroxyalkyle.

11. Composition de revêtement antisalissure selon l'une quelconque des revendications 8 à 10, dans laquelle le monomère insaturé (a2) inclut au moins un monomère insaturé sélectionné dans le groupe consistant en le (méth)acrylate de méthyle, le (méth)acrylate d'éthyle, le (méth)acrylate de butyle, le (méth)acrylate de 2-méthoxyéthyle, le (méth)acrylate de 3-méthoxybutyle et le (méth)acrylate de 2-hydroxyéthyle.

12. Composition de revêtement antisalissure selon l'une quelconque des revendications 1 à 11, dans laquelle la teneur en zinc et/ou en cuivre dans le polymère (A) est de 0,5 à 25 % en poids du polymère (A).

13. Film de revêtement antisalissure formé à partir de la composition de revêtement antisalissure selon l'une quelconque des revendications 1 à 12.

14. Substrat ayant un film de revêtement antisalissure comprenant le film de revêtement antisalissure selon la revendication 13.

15. Substrat antisalissure dans lequel une surface d'un substrat qui doit être ou est en contact avec de l'eau de mer ou de l'eau douce est recouverte avec le film de revêtement antisalissure selon la revendication 13.

16. Substrat antisalissure selon la revendication 15, dans lequel le substrat qui doit être ou est en contact avec de l'eau de mer ou de l'eau douce est l'un quelconque parmi une structure sous-marine, une coque de navire marin et un engin de pêche.

17. Procédé pour produire un substrat ayant un film de revêtement antisalissure, comprenant les étapes (A) et (B) suivantes :
étape (A) : la formation d'un film de revêtement sur un substrat en utilisant la composition de revêtement antisalissure selon l'une quelconque des revendications 1 à 12 ; et
étape (B) : le durcissement du film de revêtement formé dans l'étape (A).

18. Procédé pour empêcher l'encrassement d'un substrat, comprenant les étapes (A) et (B) suivantes :
étape (A) : la formation d'un film de revêtement sur le substrat en utilisant la composition de revêtement antisalissure selon l'une quelconque des revendications 1 à 12 ; et
étape (B) : le durcissement du film de revêtement formé dans l'étape (A).
